# EUROPEAN PATENT APPLICATION

(11) **EP 2 818 949 A1**
(43) Date of publication of application: **31.12.2014**
(21) Application number: 13382240.3
(22) Date of filing: 26.06.2013
(51) Int. Cl.: G05B 19/401

(54) **Computer numerical control machining center with integrated coordinate measuring unit and method for measuring a workpiece in situ**

(71) Applicant: Zayer, S.A., 01013 Vitoria-Gasteiz (Alava) (ES)
(72) Inventor: Orive de Diego, Javier, 01013 Vitoria-Gasteiz (Álava) (ES); Calleja Martinez, Luis, 01013 Vitoria-Gasteiz (Álava) (ES)
(74) Representative: Carpintero Lopez, Francisco

(57) **Abstract**

The present invention relates to a computer numerical control machining center, comprising at least one coordinate measuring unit (1) which is arranged attached to the machining center (2) and which in turn comprises a carriage (3) in which a laser emitter (4) is located, where said carriage (3) is movable with respect to a column (5) according to a vertical axis (Z) perpendicular to the lateral axis (Y), where said column (5) is in turn movable with respect to a bed plate (6) according to the lateral axis (Y), the machining center (2) comprising at least one reflective element (7) located in the machining center (2), such that the laser emitter (4) can move automatically along the lateral axis (Y) and vertical axis (Z) and a laser beam (8) sequentially strikes in a plurality of required positions, said at least one reflective element (7) reflects the laser beam (8) in each of the positions, and the machine comprising a processing unit wherein the measurements of said plurality of positions are recorded and processed.

## Description

### Technical Field of the Invention

A first aspect of the present invention relates to a computer numerical control machining center comprising an integrated coordinate measuring unit which allows verifying a workpiece in situ while machining after calibrating the center itself by means of said coordinate measuring unit. A second aspect of the invention relates to a method for measuring a workpiece in situ, in the actual machining center of the first aspect of the invention by means of the coordinate measuring unit.

The invention is applicable in the machine tool industry, and more specifically in the field of machining large workpieces in which high dimensional precision is required, such as the case of large workpieces for applications in the aeronautical sector.

### Background of the Invention

The need to machine large workpieces with very narrow tolerance ranges is increasingly common today and particularly in specific sectors. Said machining has a very high cost both in terms of raw material and machining time in the center.

In order to minimize said costs, there is a need to perform periodic inspections to check the process as well as to verify and inspect the actual workpiece in the machine itself while machining. Likewise, periodic operations for calibrating and adjusting the machining center must be performed, so the intervention of a highly qualified operator is required.

In addition to the foregoing, once the workpiece was machined, it was transferred to a coordinate measuring machine (CMM) for verification, which is extremely expensive and slow considering that this verification process must be applied to all machined workpieces, with the time and the reduction in productivity that this entails. Furthermore, in the event that the workpiece turns out to be invalid, such that it requires an additional machining operation, repositioning the workpiece in its original holding mechanism is extremely complicated, so the probability of having to dispose of the entire workpiece at this final point of the value chain increases considerably.

Therefore for such workpieces, two essential aspects must be combined; on one hand, the quality requirements established by the current market must be complied with and assured, and on the other, the market requires that production be competitive and efficient.

To comply with said two aspects simultaneously, means have been developed for inspecting each workpiece with sufficient precision in the actual machining center, thus preventing the need to transfer the workpiece to specific verification equipment, with the time and cost this entails, in addition to allowing timely corrections in the actual machining center, which allows acting earlier in the value chain, with the savings this entails. Being able to verify the workpiece in the machine itself contributes to the efficiency of the machining process, considering the high productivity of these workpieces.

In this sense, means for taking measurements in workpieces using the machining center itself, particularly a milling machine, are available on the market today. To that end, it is necessary to couple a probe or sensor in the position of the tool. There is computer numerical control equipment comprising specific cycles for taking measurements of certain simple geometries. However, if a complete measurement of a geometry is to be taken, it is necessary to use a specific measuring computer program. Said measuring program allows importing the geometry from a data carrier for computer-aided design, CAD, running programs for measuring points on the imported geometry by means of programs specific for each workpiece, performing collision simulations, comparing the measurements with the theoretical measurements, etc. Therefore, this combination of a computer numerical control CNC machining center, which is particularly a milling machine in the mentioned case, in which a measuring program (CMM) can be run seems like an optimal solution for taking an in situ measurement of a workpiece, but in actuality such equipment does not offer the precision required by certain industrial sectors. The measurements taken by the measuring program are those of the position rulers of the same milling machine which has machined the workpiece, and therefore does not reflect substantial differences between the measurement and the theoretical measurements. Therefore, these readings do not correspond with the actual deviation between the actual magnitude of the workpiece and the theoretical measurements, so it is necessary to take the measurements of the workpiece from an external device that is not related to the readings of the rulers of the milling machine itself. In other words, sensors produce the actual errors of the machine given that they measure according to the machine setting, erroneously considering that the workpiece is correct since they do not measure the deviations produced in the machine itself. In this sense, some solutions incorporating a laser measuring head in the housing of the machining tool are described in United States patent application no. US-2011292404-A1 and in European patent application no. EP-2395319-A2, for example. Ultimately, more precise measurements are needed to enable verifying the geometry of workpieces with narrow tolerance ranges.

Metrological means for precisely measuring large workpieces in the machine itself consisting of taking measurements by means of a laser tracker have come about in order to solve these deficiencies. This device consists of a portable laser which is outside the machining center, having a wide measuring range, allowing high-resolution geometric control of large workpieces that cannot be measured in a coordinate measuring machine due to their large size.

The laser tracker is made up of a central unit connected to a computer which gathers the obtained data, and a plurality of reflectors which are placed at the points where the coordinates thereof must be determined. By means of the operation of two motors, the head of the laser can rotate about two axes, a vertical axis and another horizontal axis, orthogonal to one another. Each axis contains an encoder reading the measurement of the rotated angle. An interferometric tracker which tracks and measures the position of the reflector is also located inside the central unit. Therefore, the laser tracker comprises a laser interferometer for measuring the differences in distance from a reference point called a "nest", from which the coordinates are known, which coordinates are defined by means of a calibration process. This means that the laser beam must be continuously reflected for continuous data collection, which is achieved by means of tracking the reflector with a motor for each axis of rotation and the interferometric tracker.

The interferometric tracker in turn comprises a dual-axis PSD (Position Sensing Device) photosensor which receives part of the reflected beam. This photosensor calculates the error of the reflected beam by comparing the actual position of the beam in the sensor and its theoretical position, i.e., the center thereof. Therefore, the signal for movement which the motors must perform to place the reflected point in the center of the PSD photosensor and to therefore track the movement of the reflector must be sent to said motors.

Due to the fact that the measurements to be taken can be very far away from the source, and therefore it is likely for an uncontrolled circumstance to occur along the path of the beam interrupting same, the laser tracker incorporates an absolute distance meter (ADM) preventing the measurement from being cancelled in such case, which occurs with a conventional interferometer. The absolute distance meter uses the Fizeau principle whereby the absolute distances with respect to any fixed reflector can be obtained in several seconds, being able to be used to automatically restart the interferometer.

In addition to the distance measurement which is taken through the interferometer and as a result of a mirror located at the intersection point of the vertical axis and the horizontal axis directing it, the angle of rotation of said axes must be known to thus enable calculating the position of the point to be measured. This is done as a result of angular encoders on which the precision of the measurement depends. One of the drawbacks of the laser tracker is a consequence arising from the fact that the static behavior of angular encoders is different from their dynamic behavior, such that the measurement precision depends on the speed of the reflector, even being able to lose the reference if this speed is very high. The precision provided by angular encoders is always less than that offered by the interferometer, such that a measurement in a straight line which therefore does not need the reading of angular encoders, is always more precise. The coordinates generated are polar coordinates, such that the distance from the laser to the reflector is measured in three dimensions. These measurements are taken in the order of 1000 times per second by means of the computer.

The laser tracker always operates with a reflector and the measurement is taken at the center thereof. Some type of correction is normally used in order to obtain the location of a point of an object from one or more positions of the reflector. Since the reflectors have different dimensions and accessories, it is necessary to specify the chosen reflector before taking the measurements. Like all systems which use a laser beam, pressure and temperature values are needed to adjust the refraction index of the medium through which the laser beam passes and to assure that that the distance is measured precisely. These values can be manually inputted or, more commonly, read from sensors placed in strategic locations which send the reading thereof to the computer.

As mentioned, in addition to its complexity and cost, the greatest drawback of the laser tracker is that it measures with angular displacements of the laser, which produces errors.

Other metrological means used today for measuring large workpieces precisely in the machine itself, which is an alternative to the laser tracker, consists of taking measurements by means of a laser tracer. The laser tracer is a high speed and high precision measurement system for calibrating coordinate measuring machines (CMMs) and machine tools. In the case of the laser tracer, like in the laser tracker, the laser beam automatically tracks a reflector located in the location of the tool of the machine. The beam that bounces off the reflector returns to the tracer so that an interferometer measures the distance. The laser tracer performs vertical and horizontal movements but in no case takes angular readings by means of encoders.

The operation of the laser tracer shares certain similarities with the laser tracker, but it is based on different principles. A high precision fixed sphere with a formal error of less than 50 nm serving as a reference reflector for the interferometer is housed inside the laser tracer. This sphere is mechanically and thermally decoupled from the tracking mechanism, which assures it a sub-micro stability during the movement of the measuring device. This completely eliminates the guiding errors of the vertical and horizontal axes of rotation, obtaining stability in the rotation of the axis which is greater than 0.3 µm. The interferometer has a resolution of 1 nm in a maximum range of 6 m.

The laser tube of the tracer is located outside the apparatus itself, being connected to the tracer by means of optical fiber. Two advantages are thus obtained, namely, a more compact design is achieved, and the thermal load of the apparatus is considerably reduced. The laser tracer allows taking measurements of the length, straightness, pitch, roll and yaw with submicrometric precision, as well as calibrating a machine in less than three hours, greatly reducing the calibration time needed for other methods. Therefore, the laser tracer offers less productivity loss and reduces the verification/calibration cost. Ultimately, this solution is commonly used in the aeronautic sector because the laser tracer prevent the errors due to angular movements by means of the arrangement of several fixed lasers working in a similar manner as GPS systems with different satellites, however, this solution entails a high cost given that the device must be manually located in several positions.

### Description of the Invention

A first aspect of the present invention relates to a computer numerical control machining center comprising at least one coordinate measuring machine (CMM), also called a coordinate measuring unit, which allows verifying a workpiece as defined in claim 1. Secondary aspects of the invention are defined in the dependent claims.

The computer numerical control machining center of the invention comprises a coordinate measuring unit which is arranged attached to the machining center on one side of said machining center, the coordinate measuring unit being arranged according to a lateral axis (Y) perpendicular to a longitudinal axis (X) of movement of the machining center.

The coordinate measuring unit comprises a carriage in which a laser emitter is located, where said carriage is movable with respect to a column according to a vertical axis (Z) perpendicular to the lateral axis (Y), where said column is in turn movable with respect to a bed plate according to the lateral axis (Y). In such case, it is contemplated that the machining center comprises at least one reflective element which can be located in the machining center, such that the laser emitter can move automatically along the lateral axis (Y) and vertical axis (Z) and a laser beam sequentially strikes in a plurality of required positions in each of which said at least one reflective element reflects the laser beam.

Likewise, the machining center comprises a processing unit in which the measurements of said plurality of positions are recorded and processed.

The invention allows:
- performing a volumetric calibration of the machining center in a quick, automatic and autonomous manner. The calibration time is therefore reduced with respect to the calibration means used today given that the intervention of specialized staff to perform said calibration is not necessary since the actual operator of the machine can run a program in the computer numerical control machining equipment calibrating the machine automatically before starting the machining operations.
- verifying a workpiece that is being machined in the machine by means of periodic in situ measurements, i.e., in the machine itself. Certain workpieces require machining operations which can go on for months, such that the ability to periodically check that the machining operations are being performed correctly is extremely valuable from the viewpoint of material cost and time saving.
- assuring a measurement protocol which assures that the workpiece is correct when it is unloaded from the machining center. Today, the workpiece must be transported to a coordinate measuring machine (CMM) for verification after machining. Said transport operation can turn out to be very complicated in the case of large workpieces, in addition to needing a large coordinate measuring unit to take the measurement. If the workpiece requires any additional machining operation it is practically impossible to place the workpiece again in its original holding mechanism. In contrast, the invention offers the possibility of verifying the workpiece with a guarantee and precision without moving the workpiece from the machining center, whereby transporting the workpiece and having to arrange or invest in a large coordinate measuring unit is prevented.

Therefore, the invention comprises a coordinate measuring unit which allows verifying machined workpieces which is incorporated as part of machining center so that measurements can be taken in situ without needing to take the workpiece out of its machining location. Furthermore, the device can be used in calibrating the milling machine.

The invention allows having equipment capable of taking the measurement precisely, adjusting and verifying large-medium sized workpieces, i.e., the dimensional control thereof, in situ, i.e., in the machine itself without needing to move the workpiece from the position in which it was machined.

The invention allows taking advantage of the measurement software which allows using the milling machine like a CMM and modifying the data acquisition process to enable taking truly reliable measurements of the machined workpiece in the same machine in which it was machined. Said actual positioning reading system is also capable of calibrating the machine, offering better results in the finish of the machined workpieces.

The object of the patent is to place an external CMM machine with measurement by means of laser and longitudinal movement for two purposes:
1.- Calibrating, i.e., measuring the parameters of the machine in the machine itself. Likewise, it is contemplated that the equipment can perform a volumetric compensation for the milling machine, whereby the precision of the machined workpiece is increased.
2.- Measuring the workpiece in the same machine during the process of manufacturing workpieces.

The volumetric capacity of the machine is calibrated with a laser located outside the machine with longitudinal movement. The laser automatically moves and strikes in positions other than the desired positions and the beam is returned by means of a reflector, also called a receiver, located in the milling machine. The parameters of the milling machine are corrected by means of an algorithm.

Although the machine is calibrated the workpiece has errors because the machine is distorted by temperature problems, friction problems, etc., during operation.

To correct this, measurements are taken by means of the laser emitting the beam against a reflector located in a sensor of the machine sensing the workpiece in its positions. The beam is returned to the laser and compared with the requested measurements, and the laser corrects the machine by means of the algorithm to prevent the produced deviations.

The invention has enormous advantages given that the manufacture of large, precise workpieces such as those used in aeronautics requires precise measurements which are often taken in other installations. This entails high costs in terms of time and travelling expenses, transfers of workpieces, without including subsequent corrections or rectifications if the workpiece does not comply with the required parameters. It must be taken into account that there are workpieces that can take months to manufacture.

The operation of the machine is as follows:
The coordinate measuring unit is arranged attached to the milling machine on one side thereof and with the possibility of movement according to a lateral axis (Y) perpendicular to the longitudinal axis (X) of the milling machine.

The CMM laser has a Cartesian architecture similar to a horizontal arm coordinate measuring machine, but in this case the cantilevered horizontal arm is replaced with a measuring laser device. The movement of the column on a guide captures the coordinates of the Y-axis of the milling machine. The laser emitter is assembled on the carriage of the column and the coordinates of the Z-axis will be taken from the vertical movement thereof on the column. The coordinates of the X-axis will be taken by the laser system itself, allowing long distance measurements. Therefore, the introduction of another 6 degrees of freedom in the X-axis, precisely the axis with the longest travel, is prevented by means of the laser, reducing the number of possible geometric errors. Another advantage is that in this machine, unlike laser tracker systems, the axes are linear axes and therefore angular errors causing the tracker systems to lose precision when taking long distance measurements will not be committed.

The first step is to calibrate the milling machine. To that end, a reflector is coupled to the head, in the location of the tool. A program is run in the milling machine so that it performs a series of movements along its entire volume of work. The CMM tracks and records the movements of the reflector of the head of the milling machine; compares its readings of the actual position of the milling machine with the theoretical or programmed positions and calculates the possible geometric errors of the milling machine. The parameters for correcting the geometric errors of the machine are inputted in the CNC. A volumetric compensation for the machine can thus be performed, substantially improving its precision and therefore improving the precision of the workpieces machined with said machine.

To enable taking the measurements of the workpiece in situ, a sensor probe is placed in the milling machine in the location of the tool. A reflector is also arranged located in the head of the milling machine (as close as possible to the measurement probe) at which reflector the laser of the CMM is pointed at all times. The laser system of the CMM captures the movements of the reflector and sends the appropriate signals to the linear axes of the CMM to automatically track the reflector.

When the probe senses the workpiece and sends a signal, the CMM laser will record the coordinates of the reflector. Subsequently, the measurement system will perform a compensation for the measurement until the tip of the probe, thus offering the actual coordinates of the point that is sensed. The coordinates of the milling machine itself will also be recorded.

To take the measurements, the design of a special measuring head having the reflector integrated therein, located in an area which allows a wide range of visibility from the CMM, is considered.

Conventional methods and techniques continue to be used today for calibrating the machine tool. The geometric errors of the machine can thus be measured and compensated for "by planes" but not in the entire volume of the machine.

The volumetric calibration of the machine is becoming increasingly more popular. To perform said calibration, apparatuses such as the laser tracker or laser tracer are used.

The laser tracker takes direct measurements of the XYZ coordinates from a reflector in space. It is based on the measurement of the distance from the emitter to the reflector and of two angular movements (horizontal and vertical angles) of the laser emitter. It is a quick method but commits errors in the readings of the angular encoders, which means that it has poor precision when taking long distance measurements. In this sense, the solution of this project eliminates the angular errors. It only performs linear movements, therefore the precision of the measurement with respect to the laser tracker is increased. In terms of the measurement range, the projected CMM laser can take measurements precisely at distances greater than 20 m.

Unlike the tracker where specialized staff is needed for using same, the calibration method with the CMM laser machine is automatic. The operator would run a program that would perform movements in the volume of the machine and the latter would be automatically calibrated.

The laser tracer does not take angular measurements. It takes measurements based on the distances to a point from 4 or more different positions (multilateration method similar to GPS). To calibrate the machine, it is necessary to take the measurements of a reflector along the volume of the machine and repeating them from different positions. It has the drawback that a long time is needed to take all the measurements. Furthermore, there is a risk that temperature gradients may occur from the first measurement to the last measurement. The temperature gradients cause the structure of the machine to expand, which would significantly affect the precision of the measurements taken (measured differently in one measurement and in another). Like the tracker, specialized staff is needed to handle the laser tracer.

The calibration performed with the CMM laser of this project would assure the precision of the milling machine more quickly than that offered by the tracer laser, preventing thermal gradients. The intervention does not require specialized staff.

A preferred embodiment of the invention contemplates integrating a milling machine with an external CMM laser whereby a new method for quick, automatic and autonomous calibration is developed. The operator will run a program which automatically calibrates the milling machine. By eliminating angular encoders, the precision of the measurements taken by other current methods are improved. The CMM laser of this project will take the coordinates of the reflector in space directly without needing to take redundant measurements for obtaining a quality measurement, such that the mode of volumetric calibration will be quicker than that available today.

Today, large workpieces can only be verified with guarantees in a large CMM. Very few workshops have a large CMM; in most cases it is necessary to transport the workpiece to a special installation. CMMs are usually located in controlled environments (20ºC) so it is necessary to leave the workpiece a few days in the CMM so that the temperature stabilizes and precise measurements can be taken.

The only methods which allow taking in situ measurements of the workpiece are the laser methods (laser tracker and laser tracer) described above in the calibration section with the already described drawbacks.

The CMM laser proposed in the project can measure the workpiece in situ with great precision without needing to move the workpiece from its original holding mechanism. Upon unloading the workpiece from the machine, a measurement protocol will be guaranteed. This laser machine also has another advantage with respect to large conventional CMMs, since it will also allow taking periodic measurements during the machining process. This option is very useful for machining workshops. There are workpieces which require months of machining works and knowing that the operations are being correctly performed from time to time offers a guarantee that the process is correct. This will contribute to reducing the percentage of rejected workpieces.

In this sense, a second aspect of the invention relates to a method for verifying a workpiece by means of a machining center such as the one described above.

The method comprises the following operations:
- calibrating the machining center by means of coupling a reflective element in a head of the machining center, then running a program in the machining center so that the head performs a series of movements along its entire volume of work, while at the same time a laser emitter tracks and records the movements of the reflective element of the head; comparing readings of the actual position of the machining center with theoretical positions and a processing unit calculates the possible geometric errors of the machining center, for finally applying parameters for correcting the geometric errors of the machining center in the actual numerical control unit of the machining center to perform a volumetric compensation, and
- verifying a workpiece in situ by means of placing a sensor probe instead of the tool of the machining center, and arranging a reflective element located in the head of the machining center as close as possible to the sensor probe, aiming said reflective element at the laser emitter at all times, then capturing the movements of the reflective element and automatically tracking the reflective element, such that when the sensor probe senses the workpiece, the coordinate measuring unit sends a signal to the processing unit which records the position coordinates of the reflective element, for subsequently compensating for each measurement until the tip of the probe, the coordinates of the machining center itself thus being recorded.

Finally, the invention also relates to a computer program product comprising computer program code suitable for performing the method described above when said program code is run in a computer, a digital signal processor, a field programmable gate array, an application-specific integrated circuit, a microprocessor, a microcontroller or any other form of programmable hardware.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:

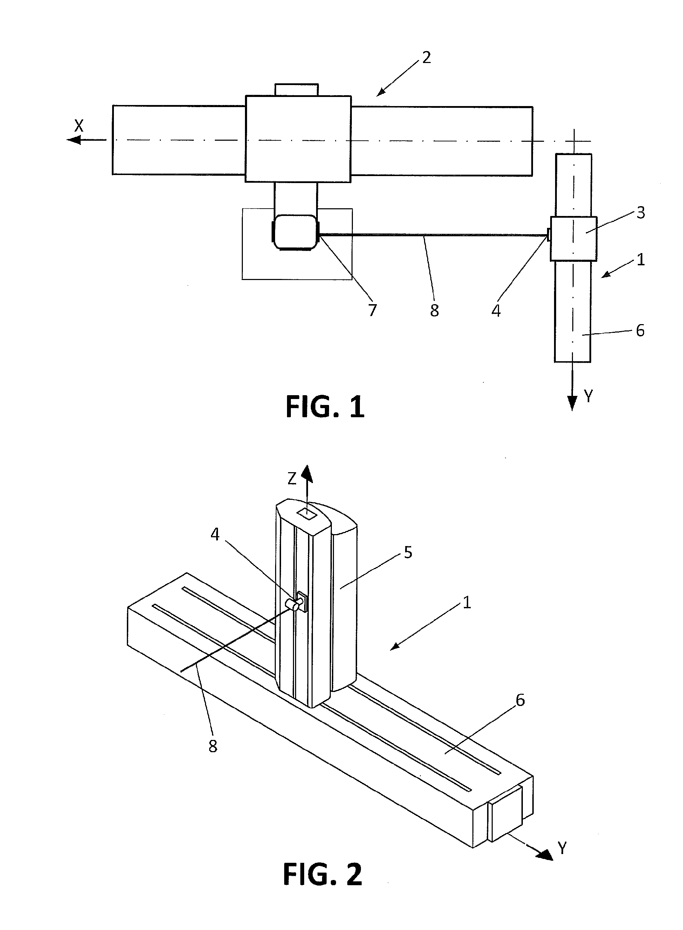

Figure 1 shows a schematic plan view of the machining center of the invention, in which the coordinate measuring unit can be seen arranged such that it is attached with the possibility of moving perpendicular to the longitudinal of the machining center.
Figure 2 shows a schematic perspective view of the coordinate measuring unit depicted in the preceding figure.
Figure 3 shows a schematic plan view of a preferred embodiment of the machining center of the invention consisting of a moving column computer numerical control milling machine, the coordinate measuring unit being able to be seen verifying a workpiece which has been machined, without there being a need to move the workpiece from the position in which it has been machined in the milling machine.
Figure 4 shows a schematic perspective view of the embodiment depicted in Figure 3, in which the coordinate measuring unit can be seen arranged with the possibility of moving perpendicular to the longitudinal axis of the machining center.
Figure 5 shows a schematic perspective view of an embodiment variant of the machine depicted in Figures 3 and 4, in which the machine has a bridge architecture which moves supported on two support columns, commonly called a gantry machine.

### Preferred Embodiment of the Invention

In view of the described drawings, it can be seen how in one of the possible embodiments of the invention the machining center (2) consists of a moving column computer numerical control milling machine in which the longitudinal axis (X) is the longitudinal axis of the milling machine (2). The milling machine (2) has a large volume of work (9) and is envisaged to be able to measure a workpiece inside said volume (9).

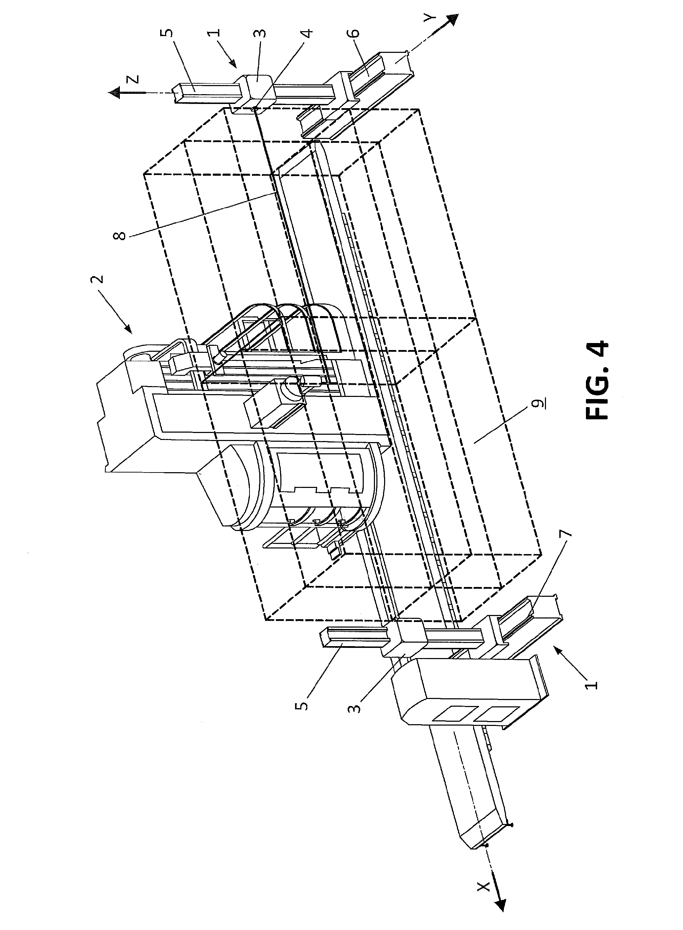

In the embodiment of the invention depicted in Figure 4, the machining center (2) comprises a coordinate measuring unit (1) comprising:
- two laser emitters (4) located with the possibility of moving according to lateral axes (Y) perpendicular to a longitudinal axis (X) for movement of a tool of the machining center (2), where said lateral axes (Y), are facing one another, located in opposition on both sides of the volume of work (9) of the milling machine (2), as can be seen in Figure 4.
- a reflective element (7) which can be located in the machining center (2), such that each laser emitter (4) can move automatically and sequentially strikes in a plurality of required positions, said reflective element (7) reflects the laser beam (8) in each of the positions,
- a processing unit in which the measurements of said plurality of positions are recorded and processed.

As seen, the lateral axis (Y) of each laser is located outside the volume of work (9) of the machining center (2).

It can be seen in the drawings that the coordinate measuring unit (1) comprises a carriage (3) in which the laser emitter (4) is located, where said carriage (3) is movable with respect to a column (5) according to a vertical axis (Z) perpendicular to the lateral axis (Y). Said column (5) is in turn movable with respect to a bed plate (6) according to the lateral axis (Y).

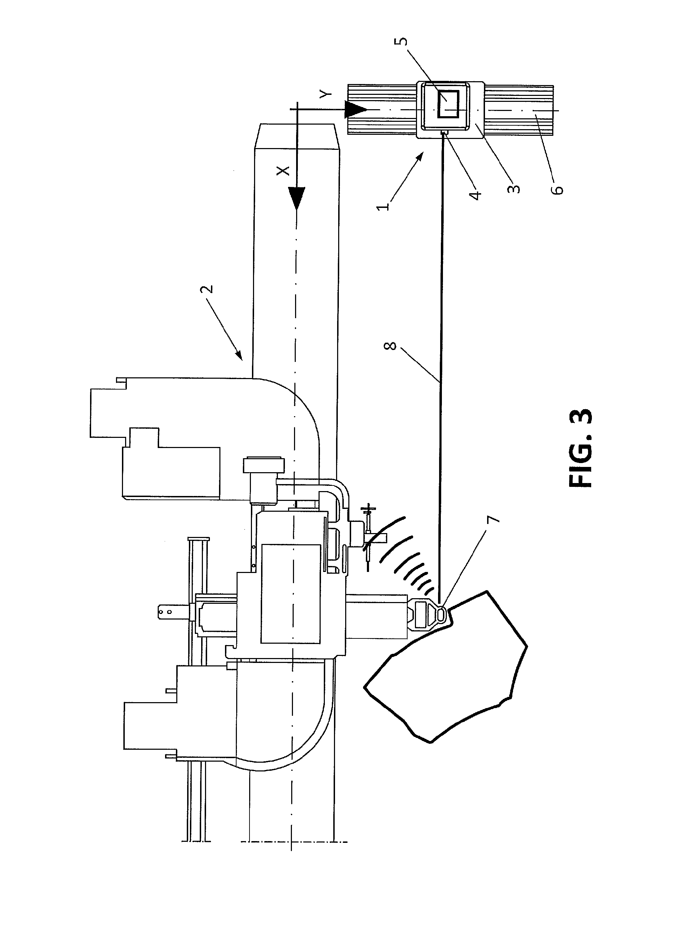

Said reflective element (7) is located as close as possible to a workpiece sensor element comprised by the machining center (2), as seen in Figure 3.

The parameters of the machining center (2) are corrected by means of an algorithm whereby the measurements of the laser (4) are compared with theoretical measurements of the workpiece and the positions of the reflector (7) located in the machine (2) are corrected by means of the algorithm to prevent the produced deviations. In other words, in order to correct the positions the measurements are taken by means of the laser (4) emitting the beam (8) against a reflector (7) located in the sensor of the machine (2) sensing the workpiece in its positions. The beam (8) is returned to the laser (4) and compared with the requested measurements and the laser (4) corrects the machine (2) by means of the algorithm to prevent the produced deviations.

The machine depicted in Figures 3 and 4 combines a moving column milling machine with a CMM in the form of a column (horizontal arm). The CMM is placed on one side of the work area (9) of the milling machine in a direction perpendicular to the longitudinal axis of the milling machine. It has two linear axes, the Y-axis (lateral movement of the column, extension of the arm) and the Z-axis (vertical movement of the laser apparatus on the column, vertical movement of the arm of the milling machine). The structure remains immobile in X when the measurements are taken. The measurements in said direction are taken by means of a laser beam emitted from the laser apparatus located in the column of the CMM, at the end of the arm. For taking measurements of the other side of the workpiece, the structure moves on guides in direction X and once in the suitable position, the laser apparatus rotates 180º and takes the measurements.

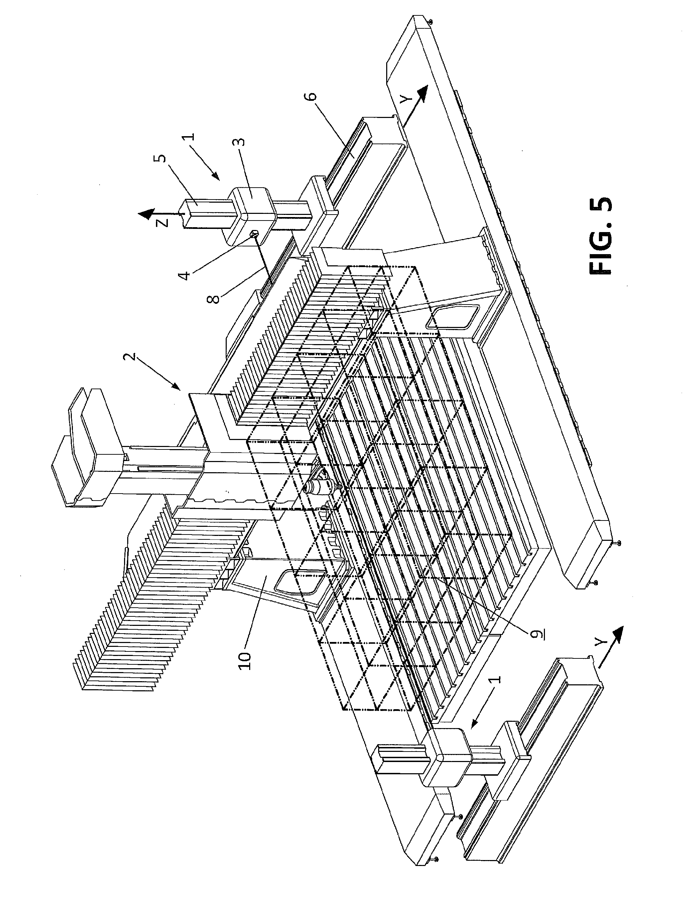

On the other hand, Figure 5 depicts an embodiment variant of the machine depicted in Figures 3 and 4, in which the machine has a bridge architecture which moves supported on two support columns (10), commonly called a gantry machine.

Before the machining starts, the milling machine is calibrated (volumetric compensation). A protocol which performs movements of the machine when it is not working on a workpiece along the entire volume of work of the machine is run. The laser of the CMM automatically tracks a reflector located in the position of the tool or in the head of the machine (as close as possible to the tip of the sensor to minimize the Abbe error and to assure a correct measurement). The CMM thus records the actual movements performed by the milling machine. By comparing those actual measurements with the reading of the rulers of the machine, a table with the position errors or deviations committed by the machine with respect to the desired positions is obtained. The movements of the machine are corrected by introducing those deviations in cross compensation tables contained in the CNC for such purpose, giving rise to an improvement in precision when machining the workpiece. The errors that may be committed by the milling machine are thus corrected to a greater extent.

The milling machine performs the required machining operations. When the operations end, a probe is coupled to enable taking the measurement of the workpiece. The milling machine does not take the coordinates of the points that are sensed by the probe since those measurements do not have the required precision. Like in calibration, the CMM is responsible for tracking the reflector, located as close as possible to the probe, by means of the laser and recording the points as sensor-workpiece contact occurs. The actual coordinates of the point that is sensed are sent to the CNC and the CNC corrects the measurement captured by the rulers (guides) of the milling machine. These already corrected coordinates are sent to the measurement software of the milling machine for post-processing.

The measurement software compares the corrected measurement coming from the CNC with the theoretical measurement and offers the results of the precision of the machined workpiece.

The precision of a machine is related to its uncertainty. To enable complying with the narrow tolerances required, it is necessary to control, evaluate and counteract the possible sources causing those possible deviations of the machine.

There are many sources that can cause those deviations. Some of them are subject to a factor of randomness making them difficult to control, for example, temperature gradients cause the elements of the machine to expand. In contrast, other sources, such as the deviations related to the kinematics of the machine, are easier to study.

Six deviations are committed in each linear axis with respect to the ideal position, 3 of them are related with linear position deviations and another 3 with angular positional deviations. In turn, 3 other errors can occur in a Cartesian system due to the perpendicularity between the axes of the XY, XZ and YZ planes. Therefore, for a three-axis machine the possibility of finding 21 geometric deviations must be contemplated.
- EXX X-axis position deviation.
- EYX deviation from straightness in direction Y along the longitudinal path.
- EZX deviation from straightness in direction Z along the longitudinal path.
- EAX deviation of rotation ROLL.
- EBX deviation of rotation PITCH.
- ECX deviation of rotation YAW.
- EXY deviation from straightness in direction X along the transverse path.
- EYY Y-axis position deviation.
- EZY deviation from straightness in direction Z along the transverse path.
- EAY deviation of rotation ROLL.
- EBY deviation of rotation PITCH.
- ECY deviation of rotation YAW.
- EXZ deviation from straightness in direction X along the vertical path.
- EYZ deviation from straightness in direction Y along the vertical path.
- EZZ Z-axis position deviation.
- EAZ deviation of rotation ROLL.
- EBZ deviation of rotation PITCH.
- ECZ deviation of rotation YAW.
- Perpendicularity of XY.
- Perpendicularity of XZ or frontal squareness.
- Perpendicularity of YZ or lateral squareness.

The rotary axes are somewhat more complex to analyze, having to contemplate a total of 11 possible deviations in each axis.

There are different methods for performing a geometric verification of the machine, but in many of them the deviations are measured in an isolated manner in a specific position and do not offer a guarantee of repeatability in other working positions. The methods capable of offering a volumetric verification (verifying the entire volume of work of a machine) are the most desired today.

In view of this description and set of drawings, the person skilled in the art will understand that the embodiments of the invention which have been described can be combined in many ways within the object of the invention. The invention has been described according to several preferred embodiments thereof, but for the person skilled in the art it will be evident that multiple variations can be introduced in said preferred embodiments without exceeding the object of the claimed invention.

## Claims

1. Computer numerical control machining center, **characterized in that** it comprises at least one coordinate measuring unit (1) which is arranged attached to the machining center (2) and which in turn comprises a carriage (3) in which a laser emitter (4) is located, where said carriage (3) is movable with respect to a column (5) according to a vertical axis (Z) perpendicular to the lateral axis (Y), where said column (5) is in turn movable with respect to a bed plate (6) according to the lateral axis (Y), the machining center (2) comprising:
- at least one reflective element (7) located in the machining center (2), such that the laser emitter (4) can move automatically along the lateral axis (Y) and vertical axis (Z) and a laser beam (8) sequentially strikes in a plurality of required positions, said at least one reflective element (7) reflects the laser beam (8) in each of the positions, and
- a processing unit in which the measurements of said plurality of positions are recorded and processed.

2. Machining center according to claim 1, wherein the lateral axis (Y) is located outside the volume of work (9) of the machining center (2).

3. Machining center according to any of the preceding claims, comprising two coordinate measuring machines (1), the lateral axis (Y) of each bed plate (6) along which each laser emitter (4) can move being located on opposite sides outside the volume of work (9) of the machining center (2).

4. Machining center according to any of the preceding claims, wherein said at least one reflective element (7) is located as close as possible to a workpiece sensor element comprised by the machining center (2).

5. Machining center according to any of the preceding claims, wherein the parameters of the machining center (2) are corrected by means of an algorithm for which the measurements of said at least one laser measuring device are compared with theoretical measurements of the workpiece, and the positions of said at least one reflective element (7) located in the machining center (2) are corrected by means of the algorithm.

6. Machining center according to any of the preceding claims, wherein the machining center (2) consists of a moving column computer numerical control milling machine, where the longitudinal axis (X) is the longitudinal axis of the milling machine.

7. Machining center according to any of claims 1 to 5, wherein the machining center (2) consists of a computer numerical control machine having a bridge architecture, capable of moving supported on two support columns (10).

8. Method for verifying a workpiece by means of a machining center according to any of the preceding claims which comprises:
- calibrating the machining center (2), for which a reflective element (7) is coupled in a head of the machining center (2),
- the head performing a series of movements along its entire volume of work (9), while at the same time a laser emitter (4) tracks and records the movements of the reflective element (7) of the head; comparing its readings of the actual position of the machining center (2) with theoretical positions and calculating possible geometric errors of the machining center (2), applying corrective parameters for correcting the geometric errors of the machining center (2) in the actual numerical control unit of the machining center (2) to perform a volumetric compensation, and
- verifying a workpiece in situ, for which a sensor probe is placed instead of the tool of the machining center (2), and arranging a reflective element (7) located in the head of the machining center (2) as close as possible to the sensor probe, aiming said reflective element (7) at the laser emitter (4) at all times, capturing the movements of the reflective element (7) and automatically tracking the reflective element (7), such that when the sensor probe senses the workpiece, the coordinate measuring machine (1) sends a signal to the processing unit which records the position coordinates of the reflective element (7) to subsequently compensate for each measurement until the tip of the probe, the coordinates of the machining center itself thus being recorded.

9. Computer program product comprising computer program code suitable for performing the method according to claim 8 when said program code is run in a computer, a digital signal processor, a field programmable gate array, an application-specific integrated circuit, a microprocessor, a microcontroller or any other form of programmable hardware.
